# EUROPEAN PATENT APPLICATION

(11) **EP 4 597 629 A2**
(43) Date of publication of application: **06.08.2025**
(21) Application number: 25155299.8
(22) Date of filing: 31.01.2025
(51) Int. Cl.: H01M 4/58, H01M 10/052, H01M 10/0587, H01M 10/42, H01M 10/44, H01M 4/136, H01M 4/36, H01M 4/48, H01M 4/62

(54) **ENERGY STORAGE APPARATUS AND ELECTRICAL DEVICE**

(30) Priority: 02.02.2024 CN 202410149534
(71) Applicant: Hithium Tech HK Limited, Hong Kong (HK)
(72) Inventor: ZHENG, Jianming, Shenzhen, 518000 (CN); HE, Wei, Shenzhen, 518000 (CN)
(74) Representative: RGTH

(57) **Abstract**

The energy storage apparatus includes an electrode assembly, including a positive electrode sheet, a negative electrode sheet, and a separator. The positive electrode sheet includes a current collector and an active material layer. The active material layer includes a first lithium-containing compound and a second lithium-containing compound being a lithium-supplement particle and including a lithium-supplement core and an outer shell. A connection area and a separation area are formed between the lithium-supplement core and the outer shell. The ratio of the path length of the outer shell of the lithium-supplement particle in the connection area to the total circumference of the outer shell within a cross-section of the positive electrode sheet is greater than or equal to 5% and less than or equal to 45%.

## Description

### TECHNICAL FIELD

The present disclosure relates to the technical field of energy storage, specifically, to an energy storage apparatus and electrical device.

### BACKGROUND

Secondary batteries, also known as rechargeable batteries or storage batteries, refer to batteries that may be continue to be used by activating active materials through recharging after the battery is discharged. The secondary batteries gradually become the main source of power for electrical device due to their recyclability characteristic. As the demand for secondary batteries gradually increases, the performance demand of the secondary batteries is higher and higher, especially the demand of the battery cycle life.

### SUMMARY

The present disclosure adopts the following technical solutions.

According to one aspect of the present disclosure, an energy storage apparatus is provided. The apparatus comprises an electrode assembly, comprising a positive electrode sheet, a negative electrode sheet, and a separator in a stacked manner. The positive electrode sheet comprises a current collector and an active material layer located on a surface of the current collector. The active material layer comprises a first lithium-containing compound and a second lithium-containing compound in granular form. The first lithium-containing compound is a positive electrode active material, and second lithium-containing compound is a lithium-supplement particle. The lithium-supplement particle comprises a lithium-supplement core and an outer shell covering the lithium-supplement core. A connection area and a separation area are formed between the lithium-supplement core and the outer shell. The distance between the lithium-supplement core and the outer shell in the connection area is less than or equal to 5 nanometers, and the distance between the lithium-supplement core and the outer shell in the separation area is greater than 5 nanometers. The ratio of the path length of the outer shell of the lithium-supplement particle in the connection area to the total circumference of the outer shell within a cross-section of the positive electrode sheet is greater than or equal to 5% and less than or equal to 45%.

According to an embodiment of the present disclosure, the maximum formation voltage of the energy storage apparatus is greater than or equal to 4 volts, and the formation duration is greater than or equal to 3 hours.

According to an embodiment of the present disclosure, the ratio of the total length of the outer contour of the lithium-supplement core to the circumference of the smallest circumscribed circle of the outer contour is greater than or equal to 0.7 and less than or equal to 1 in the cross-section.

According to an embodiment of the present disclosure, the ratio of the total length of the outer contour of the lithium-supplement core to the circumference of the smallest circumscribed circle of the outer contour is greater than or equal to 0.7 and less than or equal to 0.9 in the cross-section.

According to an embodiment of the present disclosure, in the cross-section of the positive electrode sheet, the cut edge of the outer shell is a continuous structure.

According to an embodiment of the present disclosure, the thickness of the outer shell is greater than or equal to 30 nanometers and less than or equal to 200 nanometers.

According to an embodiment of the present disclosure, the median particle size of the lithium-supplement core is greater than or equal to 3 microns and less than or equal to 10 microns.

According to an embodiment of the present disclosure, the outer shell comprises an MₓO_{y} coating layer and a conductive coating layer, and the MₓO_{y} coating layer is an inner layer; where M is at least one of Fe, Co, Ni, Ti, Zn, Mg, Al, Mn, V, Cr, Zr, Cu, Nb, Ta, W, Zr, Y, and La, 1≤x≤3, and 1≤y≤5.

According to an embodiment of the present disclosure, the conductive coating layer is a carbon coating layer.

According to an embodiment of the present disclosure, the mass proportion of carbon content in the second lithium-containing compound is greater than or equal to 0.5% and less than or equal to 4%.

According to an embodiment of the present disclosure, the mass proportion of the second lithium-containing compound in the active material layer is greater than or equal to 0.3% and less than or equal to 5%.

According to an embodiment of the present disclosure, the lithium-supplement core is Li₁₊ᵣM₁₋ₚNₚO₄₋ₛBₛ, wherein 0.1<r<6.1, 0≤p<0.99, 0≤s<0.1, M and N are respectively at least one of Fe, Co, Ni, Ti, Zn, Mg, Al, Mn, V, Cr, Zr, Cu, Nb, Ta, W, Zr, Y, and La, and B is at least one of S, N, F, Cl, and Br.

According to one aspect of the present disclosure, an electrical device is provided. The electrical device comprises the energy storage apparatus described in the above aspect, and the energy storage apparatus supplies power to the electrical device.

It should be understood that the above general description and the following detailed description are only exemplary and explanatory, and do not limit the present disclosure.

### BRIEF DESCRIPTION OF THE DRAWINGS

The above and other features and advantages of the present disclosure will become more apparent by describing exemplary embodiments thereof in detail with reference to the accompanying drawings.
FIG. 1 is a schematic structural diagram of a household energy storage system according to an exemplary embodiment.
FIG. 2 is a schematic cross-sectional structural diagram of an electrode assembly according to an exemplary embodiment.
FIG. 3 is a schematic cross-sectional structural diagram of an energy storage apparatus according to an exemplary embodiment.
FIG. 4 is a schematic cross-sectional structural diagram of a positive electrode sheet according to an exemplary embodiment.
FIG. 5 is an electron microscope image of a first observation area in a cross-section of a positive electrode sheet according to an exemplary embodiment.
FIG. 6 is an electron microscope image of a second observation area in a cross-section of a positive electrode sheet according to an exemplary embodiment.
FIG. 7 is a schematic structural diagram of an electrical device according to an exemplary embodiment.

The reference signs are explained as follows:
100, energy storage apparatus; 200, power conversion apparatus; 300, user load; 400, electrical device;
10, housing; 20, electrode assembly; 30, terminal cap unit;
11, cavity;
21, positive electrode sheet; 22, negative electrode sheet; 23, separator; 31, cover plate; 32, electrode terminal;
211, current collector; 212, active material layer;
Li1, first lithium-containing compound; Li2, second lithium-containing compound;
Li21, lithium-supplement core; Li22, outer shell;
AA, connection area; BB, separation area.

### DETAILED DESCRIPTION

Example embodiments will now be described more fully with reference to the accompanying drawings. Example embodiments may, however, be embodied in various forms and should not be construed as limited to the embodiments set forth herein; rather, these embodiments are provided so that this disclosure will be thorough and complete, and will fully convey the concepts of the example embodiments to those skilled in the art. The same reference signs in the drawings indicate the same or similar structures, and thus their detailed descriptions will be omitted.

Due to the strong temporal and spatial of the energy needed by people, in order to make rational use of energy and improve its utilization efficiency, it is necessary to store one form of energy in the same or converted form through a medium or apparatus, and then release it in a specific energy form based on future application needs.

The current green energy mainly comprises solar energy, wind energy and so on. However, solar energy and wind energy generally suffer from strong intermittency and large fluctuations, which may cause the voltage of the green power grid to be unstable (insufficient power during peak power consumption, and too much power during low power consumption). Unstable voltage will cause damage to electricity, which may lead to the problem of "wind and solar power abandonment" due to insufficient electricity demand or insufficient grid capacity.

To solve the problem of insufficient power demand or insufficient grid capacity, it is necessary to rely on energy storage apparatuses. That is, the energy storage apparatus converts electrical energy into other forms of energy through physical or chemical means and stores it. When needed, the energy stored in the energy storage apparatus is converted into electrical energy and released. In short, the energy storage apparatus is similar to a large "power bank" stores electrical energy when solar and wind energy are sufficient, and releases the stored electrical energy when needed.

The current energy storage (i.e. energy storage) has a wide range of application scenarios, comprising power generation side energy storage, grid side energy storage, renewable energy grid-connected energy storage, and user-side energy storage. The corresponding types of energy storage apparatuses comprise:
(1) large container-type energy storage devices applied in grid-side energy storage scenarios, which may serve as high quality active and reactive power regulating power sources in the grid, achieve load matching of electrical energy in time and space, enhance the capacity of renewable energy consumption, and are of great significance in grid system backup, relieving the pressure of power supply to peak loads, and regulating the peak and frequency;
(2) small and medium-sized energy storage cabinets applied in commercial and industrial energy storage scenarios (banks, shopping malls, etc.) on the user side and small household energy storage boxes used in household energy storage scenarios on the user side, with the main mode of operation being "peak shaving and valley filling". Since there is a large price difference in electricity charges at peak and valley locations according to electricity demand, users with energy storage apparatuses, in order to reduce costs, usually charge the energy storage cabinets/boxes during periods of low electricity prices, and then release the electricity in the energy storage apparatuses for use during periods of peak electricity prices to achieve the purpose of saving electricity charges. In addition, in remote regions, as well as regions with high incidence of natural disasters such as earthquakes, hurricanes, etc., the existence of household energy storage apparatuses is equivalent to the users providing backup power sources for themselves and the grid, thereby eliminating the inconvenience caused by frequent power cuts due to disasters or other reasons.

In the related art, in order to improve the cycle life of the secondary batteries, it is proposed to pre-supplement lithium during the production process of the secondary batteries to reduce the lithium consumption caused by the formation stage of the secondary batteries. However, after serious research by technicians, it was found that there are still some areas with poor lithium supplement effects and purple dots, and lithium precipitation occurs in some areas due to excessive lithium supplement, which affects the cycle life of secondary batteries and even increases safety hazards.

A main purpose of the present disclosure is to provide an energy storage apparatus and electrical device that may improve the cycle life.

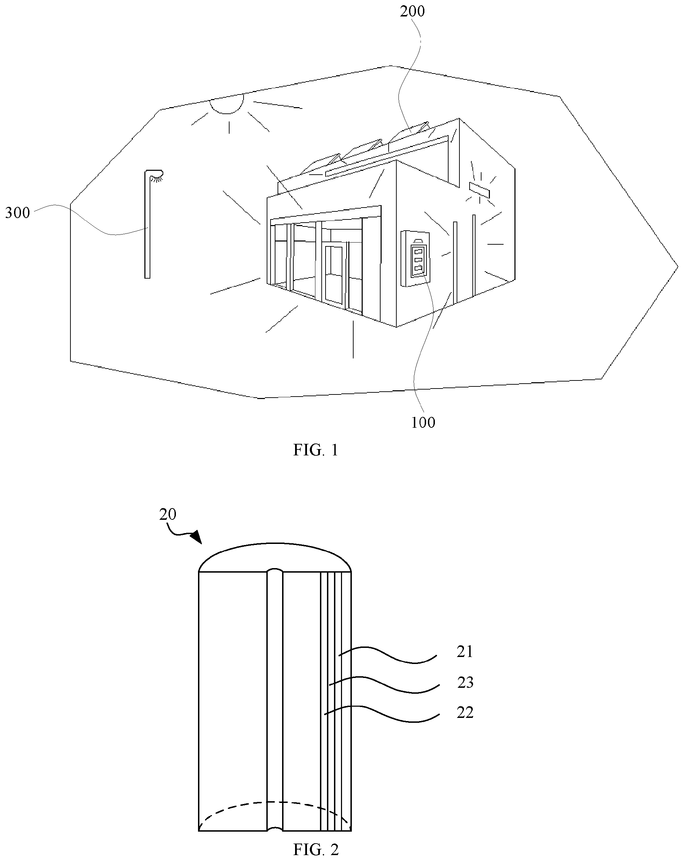

Taking the household energy storage scenario of the user-side energy storage as an example, FIG. 1 shows a household energy storage system. The household energy storage system comprises an energy storage apparatus 100 and an electrical energy conversion apparatus 200 (such as a photovoltaic panel), and a user load 300 (such as a street light, household appliances and so on). The energy storage apparatus 100 is a small energy storage box that may be mounted on an outdoor wall through a wall-mounted manner. For example, the electrical energy conversion apparatus 200 may convert solar energy into electrical energy, and store the electrical energy via the energy storage apparatus 100, which is then supplied to the user load 300 for use during the periods of peak electricity prices, or supplied to the user load 300 for use when the grid power cuts/outages.

In combination with the above-mentioned situation of storing energy by physical or electrochemical means, taking electrochemical energy storage as an example, the energy storage apparatus 100 comprises at least one chemical battery. The chemical element in the chemical battery is utilized as the energy storage medium, so as to realize the charging and discharging process through the chemical reaction or change of the energy storage medium. In short, the electrical energy generated by light energy and wind energy is stored in at least one group of chemical batteries through the chemical reaction or change of the energy storage medium, and when the use of external electrical energy reaches a peak, the electrical energy stored in the at least one group of chemical batteries is released for use or transferred to a place where the electrical energy is scarce for use through the chemical reaction or change of the energy storage medium.

The embodiment of the present disclosure provides an energy storage apparatus 100. The energy storage apparatus 100 may be, but is not limited to, a single battery (secondary battery), and a battery module, a battery pack, a battery system and so on composed of single batteries. For a single battery, it may be a lithium-ion battery, a lithium-sulfur battery, a sodium-lithium-ion battery, a sodium-ion battery, a magnesium-ion battery and so on. The single battery may be in the shape of a cylinder, a flat body, a rectangular body and so on. In addition, the single battery may also be a soft-pack battery, a battery with a case and so on, which are not limited in the embodiments of the present disclosure.

Taking the energy storage apparatus 100 as a single battery as an example, as shown in FIG. 2, the energy storage apparatus 100 comprises an electrode assembly 20. The electrode assembly 20 comprises a positive electrode sheet 21, a negative electrode sheet 22 and a separator 23 in a stacked manner, and the separator 23 is located between the positive electrode sheet 21 and the negative sheet 22. The positive sheet 21 and the negative sheet 22 have positive and negative tabs respectively, so as to facilitate series, parallel connection, or series connection and parallel connection with other single batteries through the positive and negative tabs.

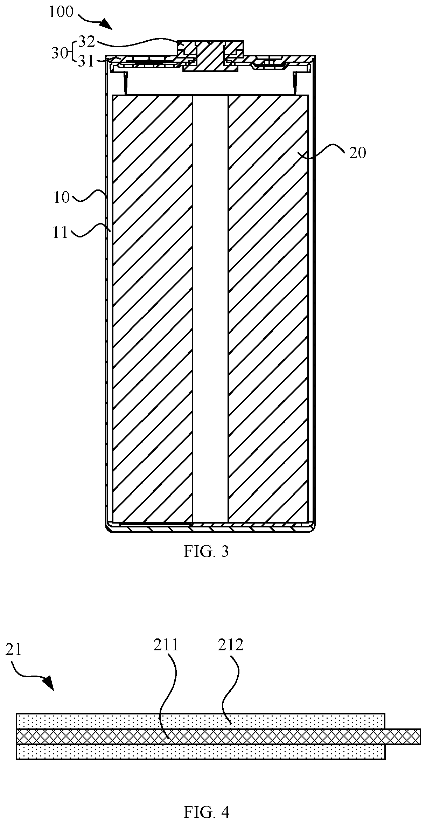

FIG. 3 illustrates a schematic structural diagram of an energy storage apparatus 100 provided by an embodiment of the present disclosure. As shown in FIG. 3, in addition to the electrode assembly 20, the energy storage apparatus 100 further comprises a housing 10 and a terminal cap unit 30. The housing 10 comprises a cavity 11 with an opening, the terminal cap unit 30 seals the opening of the cavity 11, and the electrode assembly 20 is accommodated in the cavity 11.

The housing 10 may be a cylindrical structure with an opening at one end. In this case, the energy storage apparatus 100 comprises a terminal cap unit 30 to seal the opening of the housing 10 through the terminal cap unit 30. Of course, the housing 10 may also be a cylindrical structure with openings at both ends. In this case, the energy storage apparatus 100 comprises one terminal cap unit 30 and one cover plate 31, or two terminal cap units 30, so as to seal the two openings of the housing 10 by the terminal cap unit 30 and cover plate 31 or the two terminal cap units 30, respectively.

The terminal cap unit 30 comprises a terminal cap body and an electrode terminal 32. The electrode terminal 32 is disposed on the terminal cap body and has one end connected to the electrode assembly 20 and the other end exposed outside the cavity 11 to serve as an output terminal of the energy storage apparatus 100. The terminal cap body may also be provided with an explosion-proof valve, a liquid injection hole, or an explosion-proof valve and a liquid injection hole. The explosion-proof valve is used to discharge the gas accumulated in the cavity 11 to improve the safety of the energy storage apparatus 100. The liquid injection hole is used for injecting the electrolyte into the cavity 11, so as to realize the infiltration of the electrode assembly 20.

In combination with the above-described electrode assembly 20, the positive electrode and negative electrode tabs of the positive electrode sheet 21 and the negative electrode sheet 22 may be located at different ends of the electrode assembly 20. In this case, one of the positive electrode and the negative electrode tabs is connected to the electrode terminal 32 of the terminal cap unit 30 and the other is connected to the bottom of the housing 10 or the other electrode terminal 32 of the terminal cap unit 30 to realize the electrical energy output of the electrode assembly 20.

Furthermore, the energy storage apparatus 100 further comprises a metal adapter through which the tabs of the electrode assembly 20 and the electrode terminals 32 of the terminal cap unit 30 may be connected to ensure the stable connection between the tabs and the electrode terminals 32, while ensuring the overcurrent capability.

In the related art, lithium supplement materials are usually added during the production process of the positive electrode sheet 21 to reduce the consumption of lithium ions in positive electrode active materials due to the formation of the solid electrolyte interface film in the formation stage of the energy storage apparatus 100, thereby reducing the irreversible capacity of the energy storage apparatus 100, so as to improve the cycle life of the energy storage apparatus 100. However, after serious research by technicians, it was found that although the lithium-supplement particles of the lithium-supplement material are capable of supplementing lithium ions, in the disassembled and used energy storage apparatus 100, it was found that the negative plate 22 of the electrode assembly 20 still has one part of areas where purple spots appear due to poor lithium-supplement effect, and another part of the areas where the lithium precipitation occurs due to excessive lithium supplement. Therefore, the embodiment of the present disclosure provides an energy storage apparatus 100, the positive electrode sheet 21 comprised in the energy storage apparatus 100 is added the lithium supplement material to effectively ensure lithium uniformity on each area of the positive electrode sheet 21, so as to effectively improve the cycle life of the energy storage apparatus 100, and reduce potential safety hazard.

FIG. 4 illustrates a schematic cross-sectional structural diagram of a positive electrode sheet 21 provided in an embodiment of the present disclosure. As shown in FIG. 4, the positive electrode sheet 21 includes a current collector 211 and an active material layer 212 located on the surface of the current collector 211.

For the positive electrode sheet 21, the surface of one side of the current collector 211 may be provided with the active material layer 212, or the surfaces of both sides of the current collector 211 may be provided with the active material layers 212. Compared with the case where the surface of one side of the current collector 211 is provided with the active material layer 212, the case where the surfaces of both sides of the current collector 211 are provided with the active material layers 212 may effectively increase the content of lithium ions per unit volume of the positive electrode sheet 21. At the same time, by reducing the amount of current collector 211 used, the energy storage apparatus 100 may be lightweight.

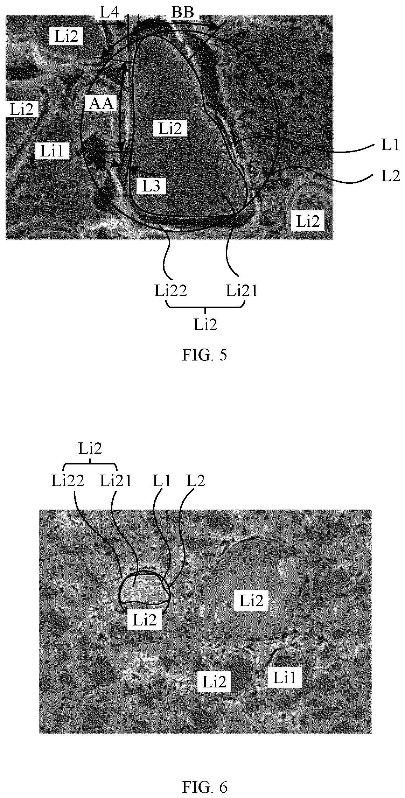

As shown in the electron microscope image of the first observation area in the cross-section of the positive electrode sheet 21 as shown in FIG. 5, and the electron microscope image of the second observation area in the cross-section of the positive electrode sheet 21 as shown in FIG. 6, it may be seen that the active material layer 212 comprises a first lithium-containing compound Li1 and the second lithium-containing compound Li2 in granular form, the first lithium-containing compound Li1 is the positive electrode active material, the second lithium-containing compound Li2 is the lithium-supplement particle, and the lithium-supplement particle comprises the lithium-supplement core Li21 and the outer shell Li22 covering the lithium-supplement core Li21 to supplement the lithium ions by comprising the second lithium-containing compound Li2 in the active material layer 212, thereby reducing the consumption of lithium ions in the positive electrode active material due to the formation of the solid electrolyte interface film.

The electron microscope images shown in Figures 5 and 6 are the area images observed through the window of the microscope under the condition that the acceleration voltage is 5 kilovolts, the working distance is 4.3 mm, the aperture size is 30 microns and the magnification times is 5,000.

The first lithium-containing compound Li1 may be a positive electrode active material, such as at least one of LiFePO₄, LiCoO₂, LiMn₂O₄, and NCM. This may reduce the selection criteria of the first lithium-containing compound Li1 and reduce the production cost of the active material layer 212. At the same time, the electrical performance of the first lithium-containing compound Li1 may be improved through a combination of various types of positive electrode active materials.

For the lithium-supplement core Li21 comprised in the lithium-supplement particles of the second lithium-containing compound Li2, it may be Li₁₊ᵣM₁₋ₚNₚO₄₋ₛBₛ, 0.1<r<6.1, 0≤ p<0.99, 0≤s<0.1, M and N are at least one of Fe, Co, Ni, Ti, Zn, Mg, Al, Mn, V, Cr, Zr, Cu, Nb, Ta, W, Zr, Y, and La respectively, and B is at least one of S, N, F, Cl, and Br. For example, the lithium-supplement core Li21 is Li₅FeO₄ (M is Fe, and p and s take values of 0).

Since the lithium content of the second lithium-containing compound Li2 is greater than the lithium content of the first lithium-containing compound Li1, a certain amount of the second lithium containing compound Li2 can be directly used to replace the same amount of the first lithium containing compound Li1 in the production of the active material layer 212. This not only achieves the lithium supplement effect but also avoids adjusting the content of other components, manufacturing it easier to simplify the preparation of the active material layer 212. The lithium content involved in the present disclosure is the content of lithium ions per unit mass, which can be the mass of the substance or the quantity of the substance (i.e. molar mass).

Optionally, in the cross-section, the ratio of the total length of the outer contour of the lithium-supplement core Li21 to the circumference of the smallest circumscribed circle of the outer contour is greater than or equal to 0.7 and less than or equal to 1. For example, the ratio of the circumference of the lithium-supplement core Li21 to the circumference of the smallest circumscribed circle is 0.7, 0.8, 0.9, or 1. In this way, the roundness of the lithium-supplement core Li21 may be ensured, thereby ensuring the uniformity of the outer shell Li22 coating when manufacturing lithium-supplement particles, ensuring the deintercalation effect of lithium ions in the lithium-supplement core Li21, while reducing the risk of cracking of the outer shell Li22 caused by lithium ion deintercalation in the lithium-supplement core Li21.

Furthermore, the ratio of the total length of the outer contour of the lithium-supplement core Li21 to the circumference of the smallest circumscribed circle of the outer contour is greater than or equal to 0.7 and less than or equal to 0.9. In this way, the roundness of the lithium-supplement core Li21 may be further ensured to the deintercalation effect of lithium ions in the lithium-supplement core Li21, while further reducing the risk of cracking of the outer shell Li22.

For the total length of the outer contour of the lithium-supplement core Li21 in the cross-section of the positive electrode sheet 21, and the circumference of the smallest circumscribed circle of the outer contour, conjunction with the cross-section structure of the lithium-supplement particles in FIG. 5 or FIG. 6 described above, the outer contour L1 of the lithium-supplement core Li21 can be labeled and the length of each segment of the outer contour L1 can be determined based on the established coordinate system can be determined the length of each segment of the outer contour L1 based on the established coordinate system to determine the total length of the outer contour L1; and determine the smallest circumscribed circle L2 of the outer contour L1 based on the established coordinate system, and determine the circumference of the smallest circumscribed circle L2.

Optionally, the median particle size of the lithium-supplement core Li21 is greater than or equal to 3 microns and less than or equal to 10 microns. In this way, the size of the lithium-supplement particles is limited by limiting the median particle size of the lithium-supplement core Li21, thereby ensuring the uniformity of distribution of the lithium-supplement particles in the active material layer 212. Of course, the median particle diameter of the lithium-supplement core may also be slightly less than 3 microns, or slightly greater than 10 microns, and this is not limited by the embodiments of the present disclosure.

For the outer shell Li22 comprised in the lithium-supplement particles of the second lithium-containing compound Li2, it may have a single coating layer structure or a multi-coating layer structure. When the outer shell Li22 has a single coating layer structure, the outer shell Li22 may be an oxide coating layer or a conductive coating layer; when the outer shell Li22 has a multi-coating layer structure, the outer shell Li22 may be an oxide coating layer and a conductive coating layer, and the oxide coating layer is an inner layer.

The oxide coating layer may be MₓO_{y} coating layer; M is at least one of Fe, Co, Ni, Ti, Zn, Mg, Al, Mn, V, Cr, Zr, Cu, Nb, Ta, W, Zr, Y and La, 1≤x≤3, and 1≤y≤5. For example, it may be Al₂O₃ coating layer. The conductive coating layer may be a carbon coating layer, a superion conductor coating layer, or the like. For example, it may be a graphite coating layer.

The specific structure of the outer shell Li22 may be set in combination with the median particle size of the lithium-supplement core Li21. For example, for the lithium-supplement core Li21 with a larger specific surface area, external gas, moisture and so on are more likely to enter it, resulting in CO₂, and moisture reacting with the lithium-supplement core Li21, resulting in a decrease in the capacity of the lithium-supplement core Li21, thereby reducing the amount of lithium supplement. At this time, an oxide coating layer may be coated on the surface of the lithium-supplement core Li21 to form protection, thereby ensuring lithium supplement effect. For the lithium-supplement core Li21 with a small specific surface area, its conductivity is small. At this time, a conductive coating layer may be coated on the surface of the lithium-supplement core Li21 to improve the conductivity. For the lithium-supplement core Li21 with a moderate specific surface area, the surface of the lithium-supplement core Li21 may be coated with an oxide coating layer and a conductive coating layer in sequence to form protection and improve conductivity.

For the specific surface area of the lithium-supplement core Li21, the larger the particle size is, the smaller the specific surface area is, and the smaller the particle size is, the larger the specific surface area is. In this way, for example, only the oxide coating layer may be provided when the median particle size of the lithium-supplement core Li21 is less than or equal to 10 microns; and only the conductive coating may be provided when the median particle size of the lithium-supplement core Li21 is greater than or equal to 3 microns. When the median particle diameter of the lithium-supplement core Li21 is greater than or equal to 3 microns and less than or equal to 10 microns, an oxide coating layer and a conductive coating layer are simultaneously provided. Of course, an oxide coating layer may also be provided when the median particle size of the lithium-supplement core Li21 is greater than 10 microns, and a conductive coating layer may be provided when the median particle size of the lithium-supplement core Li21 is less than 3 microns. When the median particle diameter is less than 3 microns or greater than 10 microns, both an oxide coating layer and a conductive coating layer are provided. This is not limited by the embodiment of the present disclosure.

Taking the case where the outer shell Li22 comprises an oxide coating layer and a carbon coating layer as an example, the preparation method of the second lithium-containing compound Li2 may be: mixing the lithium source and the precursor Fe source in a molar ratio of 5 to 6:1, ball milling and sintering at a high temperature of 600 to 800 degrees Celsius for 15 to 20 hours under a protective gas (such as nitrogen and so on.) to obtain a lithium-supplement core Li21 in granular form. Then, the lithium-supplement core Li21 is first coated with a oxide layer by ALD (Atomic Layer Deposition), CVD (Chemical Vapor Deposition), PLD (Pulsed Laser Deposition) and other technologies to obtain oxide coating layer, and the particles with the oxide coating layer are mixed with an organic carbon source and sintered at a high temperature of 300 to 500 degrees Celsius for 4 to 6 hours to obtain a second lithium-containing compound Li2 with the oxide coating layer and the carbon coating layer.

After sintering at high temperature to obtain a lithium-supplement core Li21 in granular form, through ball milling, screening, and other operations, particles with a ratio greater than or equal to 0.7 and less than or equal to 1 can be obtained as lithium-supplement core Li21, where the ratio is the total length of the outer contour to the circumference of the smallest circumscribed circle of the outer contour of the lithium-supplement core Li21in the cross-section. At the same time, lithium-supplement core Li21 with a median particle size greater than or equal to 3 microns and less than or equal to 10 microns can also be obtained.

For lithium-supplement particles comprising the carbon coating layer, in combination with the above-mentioned production method of the second lithium-containing compound Li2, when the lithium-supplement core Li21 is mixed with the organic carbon source, the ratio of the organic carbon source may be adjusted, so that the mass proportion of carbon content in the produced second lithium-containing compound Li2 is greater than or equal to 0.5% and less than or equal to 4%, so as to avoid affecting the conductive performance of the second lithium-containing compound Li2 in the active material layer 212 due to the low carbon content in the second lithium-containing compound Li2, and also avoid causing the carbon coating layer to be too thick due to the high content of carbon in the second lithium-containing compound Li2, which will affect the deintercalation of lithium ions on the lithium-supplement core Li21. For example, the mass proportion of carbon in the second lithium-containing compound Li2 is 0.5%, 1%, 2%, or 4%.

In addition, for the outer shell Li22 (oxide coating layer, conductive coating layer, or oxide coating and conductive coating layer) covering the lithium-supplement core Li21, in order to prevent the external air from entering the lithium-supplement core Li21 and reacting due to rupture of the outer shell Li22, which leads to reduction of the deintercalation ability of lithium ions in the lithium-supplement core Li21, the outer shell Li22 of the lithium-supplement particle has a continuous spherical structure, that is, as shown in Fig. 5 or FIG. 6, in the electron microscope image of the cross-section of the positive electrode sheet 21, the cut edge of the outer shell Li22 has a continuous structure. In this way, it may be ensured that the outer shell Li22 completely covers the lithium-supplement core Li21, and the reaction between the lithium-supplement core Li21 and the external air may be avoided. For example, in combination with the above-mentioned preparation method of the second lithium-containing compound Li2, the ratio of the precursor Fe source and the ratio of the organic carbon source may be adjusted to ensure that the outer shell Li22 of the lithium-supplement particle has a continuous spherical structure.

It should be understood that the spherical structure described herein may be a regular spherical structure or a spherical-like structure similar to a sphere.

Furthermore, the thickness of the outer shell Li22 of the lithium-supplement particle is greater than or equal to 30 nanometers and less than or equal to 200 nanometers. In this way, it may be avoided the outer shell Li22 being too thin, which may cause cracking during the formation stage or charge and discharge stage of the energy storage apparatus 100, and external gas, moisture and so on are easily enter it to cause CO₂ and moisture to react with the lithium-supplement core Li21, and avoid the outer shell Li22 being too thick, which may affect the deintercalation of lithium ions in the lithium-supplement core Li21 and the infiltration of the lithium-supplement core Li21 by the electrolyte. It may also avoid the problem of a relatively small mass proportion of lithium ions in the lithium-supplement particles due to the thick outer shell Li22. For example, in combination with the above-mentioned preparation method of the second lithium-containing compound Li2, the ratio of the precursor Fe source and the ratio of the organic carbon source may be adjusted to ensure that the thickness of the outer shell Li22 is greater than or equal to 30 nanometers and less than or equal to 200 nanometers. For example, the thickness of the outer shell Li22 is 30 nanometers, 50 nanometers, 100 nanometers, or 200 nanometers.

It may be noted that the thickness of the outer shell Li22 may be different in each region. In this case, the judgment may be made based on the minimum thickness and the maximum thickness of the outer shell Li22, as long as the minimum thickness and the maximum thickness are within the above range. By way of example, the outer shell Li22 has a minimum thickness of 45 nanometers and a maximum thickness of 180 nanometers.

In some embodiments, after the preparation of the second lithium containing compound Li2 is completed, the lithium-supplement particles of the second lithium-containing compound Li2 are screened based on their particle size described above, so that the particle size distribution of the lithium-supplement particles of the second lithium-containing compound Li2 satisfies (Dᵥ99-Dᵥ10)/Dᵥ50 less than or equal to 4, that is, the particle size distribution of lithium-supplement particles satisfies the difference between the particle size of 99% by volume and the particle size of 10% by volume is less than or equal to 4 times the median particle size. In this way, it may be ensured that the particle size distribution of the lithium-supplement particles of the second lithium-containing compound Li2 is relatively uniform, and the particle size difference of the lithium-supplement particles may be avoided to be large, avoiding large differences in the particle size of the lithium supplement particles, which may lead to concentrated lithium ion distribution in the active material layer 212 due to large lithium-supplement particles in local areas, and poor lithium supplement effect due to small lithium-supplement particles in local areas.

In the embodiment of the present disclosure, in addition to the first lithium-containing compound Li1 and the second lithium-containing compound Li2, the active material layer 212 further comprises at least one of a conductive agent, a binder and a solvent. The conductive agent may be conductive carbon black, conductive graphite, graphene, carbon nanotubes, carbon fibers and so on. The binder may be at least one of styrene-butadiene rubber, polyvinylidene fluoride, polyvinyl alcohol, polyethylene acrylic acid, polyphenylate, polytetrafluoroethylene and so on. The solvents may be at least one of deionized water, N-methylpyrrolidone and so on.

Optionally, the mass ratio of the first lithium-containing compound Li1 and the second lithium-containing compound Li2 in the active material layer 212 may be 89~98.7:0.3~5 to ensure the content of the second lithium-containing compound Li2 in the active material layer 212. , thereby ensuring the lithium supplement effect of the energy storage apparatus 100. For example, the mass ratio of the first lithium-containing compound Li1 to the second lithium-containing compound Li2 is 89:0.3, 91:1.0, 92:2.0, 94:3.0, 96:4.0, 98.7:5.0 or so on.

Furthermore, the mass ratio of the first lithium-containing compound Li1 and the second lithium-containing compound Li2 in the active material layer 212 may be 92~98.5:0.3~5 to ensure the content of the second lithium-containing compound Li2 in the active material layer 212, so as to ensure the lithium supplement effect of the energy storage apparatus 100 and avoids lithium precipitation at the same time.

In some embodiments, the preparation of the active material layer 212 may be as follows: mixing the first lithium-containing compound Li1, the second lithium-containing compound Li2, the conductive agent, and the binder according to a mass ratio of 92%~98.5%:0.3%~ 5%: 0.2%~2%: 1%~3% are mixed at high speed, and then adding a solvent for secondary stirring to obtain a positive electrode slurry with a solid content of 50%~70%; then applying the positive electrode slurry on one surface of the current collector 211 at a single-sided coating density of 0.16 mg/square millimeter to 0.26 mg/square millimeter, drying at a temperature of 90 degrees Celsius to 110 degrees Celsius, and compacting to obtain a compacted density of active material layer 212 of 2.3~2.7g/cm³.

In this way, by the above preparation process, the uniform distribution of the second lithium-containing compound Li2 in the active material layer 212 is ensured, and the lithium-supplement effect of the second lithium-containing compound Li2 is ensured, and the phenomenon is avoided which is lithium precipitation due to excessive accumulation of lithium-supplement materials in local areas on the active material layer 212 or poor lithium supplement effect due to too sparse lithium supplement. In the above preparation process, the stirring speed during the two stirrings may be greater than or equal to 1000 rpm, for example, the stirring speed may be 1000 rpm, 1500 rpm, 2000 rpm, or 2500 rpm. Of course, the two stirring speeds may also be slightly less than 1000 rpm, for example, 900 rpm or 800 rpm, as long as the uniform distribution of the second lithium-containing compound Li2 in the active material layer 212 may be ensured.

The mass proportion of the second lithium-containing compound Li2 in the active material layer 212 is greater than or equal to 0.3% and less than or equal to 5%, so as to prevent the low content of the second lithium-containing compound Li2 in the active material layer 212 from affecting lithium supplement, to prevent the high content of the second lithium-containing compound Li2 in the active material layer 212 from local lithium precipitation due to excessive lithium supplement, and to prevent the small mass proportion of the first lithium-containing compound Li1 in the active material layer 212 from a decrease in energy density. For example, the mass proportion of the second lithium-containing compound Li2 in the active material layer 212 is 0.3%, 1.0%, 2%, 3%, or 5%.

In the present disclosure, after the preparation of the positive electrode sheet 21 is completed, it may be may be in combination with the negative electrode sheet 22 and the separator 23 to assemble the electrode assembly 20, and the housing 10 and the terminal cap unit 30 may be combined to assemble the energy storage apparatus 100. The assembled energy storage apparatus 100 usually needs to undergo a formation stage to form a good solid electrolyte interface film before charging and discharging to provide electrical energy to the electrical device 400.

The above-mentioned preparation method of the second lithium-containing compound Li2 and the preparation method of the positive electrode sheet 21 may be combined to ensure the uniform distribution of the lithium-supplement particles in the second lithium-containing compound Li2 in the active material layer 212, and the deintercalation ability of lithium ions of the lithium-supplement particles, so as to ensure the lithium supplement effect of the lithium-supplement particles, thereby improving the cycle life of the energy storage apparatus 100 during the charge and discharge stages.

Furthermore, in order to better improve the cycle life of the energy storage apparatus 100, the second lithium-containing compound Li2 of the active material layer 212 on the positive electrode sheet 21, as shown in FIG. 5, where a connection area AA and a separation area BB may be formed between the lithium-supplement core Li21 and the outer shell Li22 of the lithium particles, the lithium-supplement particles in the active material layer 212 are within the cross-section of the positive electrode sheet 21, and the ratio of the length of the outer shell Li22 in the connection area AA to the total circumference of the outer shell is greater than or equal to 5% and less than or equal to 45%. In this way, it is ensured that the lithium-supplement particles release enough lithium ions to form a solid electrolyte interface film during the formation stage of the energy storage apparatus 100, thereby avoiding consumption of lithium ions in the first lithium-containing compound, thereby ensuring the cycle life of the energy storage apparatus 100; at the same time, it may avoid the situation that the lithium-supplement particles have a small connection area AA and have fewer lithium ion transmission paths, resulting in poor subsequent lithium supplement effect.

The path length of the outer shell Li22 in the connection area AA refers to the length of the cross-sectional contour of the outer shell Li22 in the connection area AA within the cross-section of the positive electrode sheet 21. The total circumference of the outer shell refers to the total length of the cross-sectional contour of the outer shell Li22 within the cross-section of the positive electrode sheet 21. Multiple connection areas AA may be formed between the lithium-supplement core Li21 and the outer shell Li22, and the path length of the outer shell Li22 in the connection area AA may be the sum of the length of the cross-sectional contour of the outer shell Li22 in the connection area AA in the cross-section of the positive electrode sheet 21. As shown in Figure 5, the connection area AA and the separation area BB are formed between the lithium-supplement core Li21 and the outer shell Li22. The distance L3 between the lithium-supplement core Li21 and the outer shell Li22 in the connection area AA is less than or equal to 5 nanometers. The distance L4 between the outer shell Li22 in the separation area BB is greater than 5 nanometers. In addition, within the cross-section of the positive electrode sheet 21, the determination method of the path length of the outer shell Li22 in the connection area AA and the total circumference of the outer shell may refer to the above-mentioned method of determining the total length of the outer contour Li21 in the cross-section. The difference is that the positive electrode sheet 21 is obtained by disassembling the energy storage apparatus 100. At this time, the positive electrode sheet 21 needs to be cleaned with an electrolyte solvent to remove the residual electrolyte on the positive electrode sheet 21.

It may be noted that the lithium-supplement core Li21 and the outer shell Li22 of the second lithium-containing compound Li2 may form multiple alternately distributed connection areas AA and separation areas BB, and only one connection area AA and one adjacent separation area BB are shown as an example are shown in FIG. 5.

In addition, in combination with the roundness of the lithium-supplement core Li21 mentioned above, the ratio of the total length of the outer contour of the lithium-supplement core Li21 to the circumference of the smallest circumscribed circle of the outer contour may be further controlled to further control the path length of the outer shell Li22 in the connection area AA, so as to further avoid the situation where the lithium supplement particles form fewer lithium ion transmission paths due to the smaller connection area AA, resulting in poor subsequent lithium supplement effects.

It should be understood that during the formation stage of the energy storage apparatus 100, the lithium-supplement core Li21of the second lithium-containing compound Li2 will release lithium ions, thereby forming the connection area AA and the separation area BB between the lithium-supplement core Li21 and the outer shell Li22 of the lithium-supplement particle. The size of the connection area AA formed between the lithium-supplement core Li21 and the outer shell Li22 is determined by the amount of lithium ions released by the lithium-supplement core Li21 during the formation stage, and the size of the connection area AA determines the lithium ion transmission path formed by the lithium-supplement core Li21, so as to determine the degree of lithium supplement of the lithium-supplement core Li21.

In the embodiment of the present disclosure, in the cross-section of the positive electrode sheet 21, the separation area BB and the connection area AA formed between the lithium-supplement core Li21 and the outer shell Li22 of the lithium-supplement particle, and the ratio of the path length of the outer shell Li22 in the connection area AA to the total length of the outer shell is greater than or equal to 5% and less than or equal to 45%, which may be formed during the formation stage of the energy storage apparatus 100.

For example, the maximum voltage of the energy storage apparatus 100 may be set to be greater than or equal to 4.0 volts to ensure that the ratio the path length of the outer shell Li22 of the lithium-supplement particles in the connection area AA to the total circumference of the outer shell is greater than or equal to 5% and less than or equal to 45% in the active material layer 212 on the positive electrode sheet 21, thereby ensuring the lithium supplement effect of the lithium-supplement particles. For example, the formation voltage of the energy storage apparatus 100 in the formation stage is 4.0 volts, 4.1 volts, 4.2 volts or so on.

Furthermore, the formation duration of the energy storage apparatus 100 may also be set to ensure that the ratio of the path length of the outer shell Li22 of the lithium-supplement particles in the connection area AA to the total circumference of the outer shell in the active material layer 212 on the positive electrode sheet 21 is greater than or equal to 5% and less than or equal to 45%. For example, the formation duration of the energy storage apparatus 100 may be set to be greater than or equal to 3 hours. For example, the formation duration is 3 hours, 3.2 hours, 3.5 hours or so on.

Next, the cycle life of the energy storage apparatus 100 described above will be explained using specific examples.

### Example 1

In combination with the above-mentioned preparation method of the second lithium-containing compound Li2, the lithium-supplement particles of the second lithium-supplement compound Li2 (Li₅FeO₄@Al₂O₃@C) was prepared, where the lithium-supplement core Li21 was Li₅FeO₄, and the outer shell Li22 comprised an oxide coating layer of Al₂O₃ and a carbon coating layer. The minimum thickness of the outer shell Li22 was greater than 30 nanometers, and the average thickness was 100 nanometers. The carbon content of the second lithium-containing compound Li2 was 1.5%. Afterwards, in combination with the above-mentioned preparation method of the positive electrode sheet 21, the first lithium-containing compound Li1 (lithium iron phosphate), the second lithium-containing compound Li2, the conductive agent (conductive carbon black), and the binder (polyvinylidene fluoride) in the mass ratio of 92:3:2:3 was mixed at high speed, then the solvent (N-methylpyrrolidone) was added for secondary stirring to obtain the positive electrode slurry with a solid content of 60%. The positive electrode slurry was applied on one surface of the current collector 211 at a single-sided coating density of 0.23 mg/square millimeter, and then dried at a temperature of 110 degrees Celsius, and then compacted to obtain an active material layer 212 with a compacted density of 2.5g/cm³, to obtain the positive electrode sheet 21. Then, the negative electrode sheet 22 and the separator 23 were combined to form the electrode assembly 20, which was then assembled with the housing 10 and the terminal cap unit 30 to obtain the energy storage apparatus 100.

After the energy storage apparatus 100 was formed at a maximum formation voltage of 4.0 volts for 3 hours, it may be reached from the test conducted during the charging and discharging stage that the discharge capacity per gram of the energy storage apparatus 100 is 145.0 mAh/g when discharged at a rate of 0.5 with a voltage drop from 3.65V to 2.5V, and the cycle retention rate is 101.3% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 9.4%, and (Dᵥ99-Dᵥ10)/Dᵥ50 was 3.6, and the powder resistance of the positive electrode sheet 21 was 0.87 ohm/cm.

### Example 2

In combination with the above-mentioned preparation method of the second lithium-containing compound Li2, the lithium-supplement particles of the second lithium-supplement compound Li2 (Li₅FeO₄@Al₂O₃@C) was prepared, where the lithium-supplement core Li21 was Li₅FeO₄, and the outer shell Li22 comprised an oxide coating layer of Al₂O₃ and a carbon coating layer. The minimum thickness of the outer shell Li22 was greater than 30 nanometers, and the average thickness was 100 nanometers. The carbon content of the second lithium-containing compound Li2 was 1.5%. Afterwards, in combination with the above-mentioned preparation method of the positive electrode sheet 21, the first lithium-containing compound Li1 (lithium iron phosphate), the second lithium-containing compound Li2, the conductive agent (conductive carbon black), and the binder (polyvinylidene fluoride) in the mass ratio of 92:3:2:3 was mixed at high speed, then the solvent (N-methylpyrrolidone) was added for secondary stirring to obtain the positive electrode slurry with a solid content of 60%. The positive electrode slurry was applied on one surface of the current collector 211 at a single-sided coating density of 0.23 mg/square millimeter, and then dried at a temperature of 110 degrees Celsius, and then compacted to obtain an active material layer 212 with a compacted density of 2.5g/cm³, to obtain the positive electrode sheet 21. Then, the negative electrode sheet 22 and the separator 23 were combined to form the electrode assembly 20, which was then assembled with the housing 10 and the terminal cap unit 30 to obtain the energy storage apparatus 100.

After the energy storage apparatus 100 was formed at a maximum formation voltage of 4.0 volts for 3 hours, it may be reached from the test conducted during the charging and discharging stage that the discharge capacity per gram of the energy storage apparatus 100 is 145.0 mAh/g when discharged at a rate of 0.5 with a voltage drop from 3.65V to 2.5V, and the cycle retention rate is 102.0% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 5%, and (Dᵥ99-Dᵥ10)/Dᵥ50 was 2.2, and the powder resistance of the positive electrode sheet 21 was 0.83 ohm/cm.

### Example 3

In combination with the above-mentioned preparation method of the second lithium-containing compound Li2, the lithium-supplement particles of the second lithium-supplement compound Li2 (LieCoO₄@Al₂O₃@C) was prepared, where the lithium-supplement core Li21 was Li₆COO₄, and the outer shell Li22 comprised an oxide coating layer of Al₂O₃ and a carbon coating layer. The minimum thickness of the outer shell Li22 was greater than 30 nanometers, and the average thickness was 100 nanometers. The carbon content of the second lithium-containing compound Li2 was 2%. Afterwards, in combination with the above-mentioned preparation method of the positive electrode sheet 21, the first lithium-containing compound Li1 (lithium iron phosphate), the second lithium-containing compound Li2, the conductive agent (conductive carbon black), and the binder (polyvinylidene fluoride) in the mass ratio of 92:3:2:3 was mixed at high speed, then the solvent (N-methylpyrrolidone) was added for secondary stirring to obtain the positive electrode slurry with a solid content of 60%. The positive electrode slurry was applied on one surface of the current collector 211 at a single-sided coating density of 0.23 mg/square millimeter, and then dried at a temperature of 110 degrees Celsius, and then compacted to obtain an active material layer 212 with a compacted density of 2.5g/cm³, to obtain the positive electrode sheet 21. Then, the negative electrode sheet 22 and the separator 23 were combined to form the electrode assembly 20, which was then assembled with the housing 10 and the terminal cap unit 30 to obtain the energy storage apparatus 100.

After the energy storage apparatus 100 was formed at a maximum formation voltage of 4.1 volts for 3.5 hours, it may be reached from the test conducted during the charging and discharging stage that the discharge capacity per gram of the energy storage apparatus 100 is 145.3 mAh/g when discharged at a rate of 0.5 with a voltage drop from 3.65V to 2.5V, and the cycle retention rate is 102.1% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 7%, and (Dᵥ99-Dᵥ10)/Dᵥ50 was 2.3, and the powder resistance of the positive electrode sheet 21 was 0.87 ohm/cm.

### Example 4

In combination with the above-mentioned preparation method of the second lithium-containing compound Li2, the lithium-supplement particles of the second lithium-supplement compound Li2 (Li₅FeO₄@AlF₃@C) was prepared, where the lithium-supplement core Li21 was Li₅FeO₄, and the outer shell Li22 comprised an oxide coating layer of AlF₃ and a carbon coating layer. The minimum thickness of the outer shell Li22 was greater than 30 nanometers, and the average thickness was 100 nanometers. The carbon content of the second lithium-containing compound Li2 was 1.5%. Afterwards, in combination with the above-mentioned preparation method of the positive electrode sheet 21, the first lithium-containing compound Li1 (lithium iron phosphate), the second lithium-containing compound Li2, the conductive agent (conductive carbon black), and the binder (polyvinylidene fluoride) in the mass ratio of 92:3:2:3 was mixed at high speed, then the solvent (N-methylpyrrolidone) was added for secondary stirring to obtain the positive electrode slurry with a solid content of 60%. The positive electrode slurry was applied on one surface of the current collector 211 at a single-sided coating density of 0.23 mg/square millimeter, and then dried at a temperature of 110 degrees Celsius, and then compacted to obtain an active material layer 212 with a compacted density of 2.5g/cm³, to obtain the positive electrode sheet 21. Then, the negative electrode sheet 22 and the separator 23 were combined to form the electrode assembly 20, which was then assembled with the housing 10 and the terminal cap unit 30 to obtain the energy storage apparatus 100.

After the energy storage apparatus 100 was formed at a maximum formation voltage of 4.1 volts for 3.5 hours, it may be reached from the test conducted during the charging and discharging stage that the discharge capacity per gram of the energy storage apparatus 100 is 145.2 mAh/g when discharged at a rate of 0.5 with a voltage drop from 3.65V to 2.5V, and the cycle retention rate is 101.8% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 8%, and (Dᵥ99-Dᵥ10)/Dᵥ50 was 2.2, and the powder resistance of the positive electrode sheet 21 was 0.88 ohm/cm.

### Example 5

Compared with Example 2, the difference is that the first lithium-containing compound Li1 (lithium iron phosphate), the second lithium-containing compound Li2, a conductive agent (conductive carbon black), a binder (polylidene fluoride) Ethylene) was in the mass ratio 94:1:2:3. After the energy storage apparatus 100 was formed at a maximum formation voltage of 4.0 volts for 3 hours, it may be reached from the test conducted during the charging and discharging stage that the discharge capacity per gram of the energy storage apparatus 100 is 143.7 mAh/g when discharged at a rate of 0.5 with a voltage drop from 3.65V to 2.5V, and the cycle retention rate is 98.1% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 9.4%, and (Dᵥ99-Dᵥ10)/Dᵥ50 was 3.6, and the powder resistance of the positive electrode sheet 21 was 0.87 ohm/cm.

### Example 6

Compared with Example 2, the difference is that the first lithium-containing compound Li1 (lithium iron phosphate), the second lithium-containing compound Li2, conductive agent (conductive carbon black), binder (polylidene fluoride) Ethylene) according to the mass ratio 90:5:2:3. After the energy storage apparatus 100 was formed at a maximum formation voltage of 4.0 volts for 3 hours, it may be reached from the test conducted during the charging and discharging stage that the discharge capacity per gram of the energy storage apparatus 100 is 147.0 mAh/g when discharged at a rate of 0.5 with a voltage drop from 3.65V to 2.5V, and the cycle retention rate is 101.5% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 9.4%, and (Dᵥ99-Dᵥ10)/Dᵥ50 was 3.6, and the powder resistance of the positive electrode sheet 21 was 0.87 ohm/cm.

### Comparative Example 1

In combination with the above-mentioned preparation method of the second lithium-containing compound Li2, the lithium-supplement particles of the second lithium-supplement compound Li2 (Li₅FeO₄@Al₂O₃@C) was prepared, where the lithium-supplement core Li21 was Li₅FeO₄, and the outer shell Li22 comprised an oxide coating layer of Al₂O₃ and a carbon coating layer. The minimum thickness of the outer shell Li22 was 25 nanometers, and the carbon content of the second lithium-containing compound Li2 was 0.4%. Afterwards, in combination with the above-mentioned preparation method of the positive electrode sheet 21, the first lithium-containing compound Li1 (lithium iron phosphate), the second lithium-containing compound Li2, the conductive agent (conductive carbon black), and the binder (polyvinylidene fluoride) in the mass ratio of 92:3:2:3 was mixed at high speed, then the solvent (N-methylpyrrolidone) was added for secondary stirring to obtain the positive electrode slurry with a solid content of 60%. The positive electrode slurry was applied on one surface of the current collector 211 at a single-sided coating density of 0.23 mg/square millimeter, and then dried at a temperature of 110 degrees Celsius, and then compacted to obtain an active material layer 212 with a compacted density of 2.5g/cm³, to obtain the positive electrode sheet 21. Then, the negative electrode sheet 22 and the separator 23 were combined to form the electrode assembly 20, which was then assembled with the housing 10 and the terminal cap unit 30 to obtain the energy storage apparatus 100.

After the energy storage apparatus 100 was formed at a maximum formation voltage of 3.9 volts for 3 hours, it may be reached from the test conducted during the charging and discharging stage that the discharge capacity per gram of the energy storage apparatus 100 is 143.7 mAh/g when discharged at a rate of 0.5 with a voltage drop from 3.65V to 2.5V, and the cycle retention rate is 97.0% after 500 cycles of charging and discharging. In addition, after disassembling the positive electrode sheet 21 of the energy storage apparatus 100, the path length ratio of the outer shell Li22 of the lithium supplement particles in the active material layer 212 on the positive electrode sheet 21 in the connection area AA (the ratio of the path length of the outer shell Li22 in the connection area AA to the total circumference of the outer shell) was tested to be 4%, and (Dᵥ99-Dᵥ10)/Dᵥ50 was 3.6, and the powder resistance of the positive electrode sheet 21 was 1.01 ohm/cm.

For the energy storage apparatus 100 described in the above-mentioned Examples 1-6 and Comparative Example 1 respectively, the performance parameters of the energy storage apparatus 100 are as shown in the following table.

| | Path length ratio of the outer shell in the connection area | Ratio of the total length of the outer contour of the lithium-supplement core to the circumference of the smallest circumscribed circle of the outer contour | Carbon content in the second lithium-containing compound | Maximum formation voltage (volts) | Formation duration (hours) | Discharge capacity per gram (mAh/g) | Cycle retention rate | Lithium precipitation |
|---|---|---|---|---|---|---|---|---|
| Example 1 | 9.4% | 0.7 | 1.5% | 4.0 | 3 | 145.0 | 101.3% | No lithium precipitation |
| Example 2 | 5% | 0.8 | 1.5% | 4.0 | 3 | 145.3 | 102.0% | No lithium precipitation |
| Example 3 | 7% | 0.7 | 2% | 4.1 | 3 | 145.3 | 101.9% | No lithium precipitation |
| Example 4 | 7% | 0.7 | 2% | 4.1 | 3 | 145.1 | 100.8% | No lithium precipitation |
| Example 5 | 9.4% | 0.7 | 1.5% | 4.0 | 3 | 143.7 | 98.1% | No lithium precipitation |
| Example 6 | 9.4% | 0.7 | 1.5% | 4.0 | 3 | 147 | 101.5% | Slight lithium precipitation |
| Comparative Example 1 | 4% | 0.8 | 0.4% | 3.9 | 3 | 142.7 | 96.0 | Slight lithium precipitation |

For the confirmation of the lithium supplement effect of each of the above energy storage apparatuses 100, it may be confirmed by whether purple spots appear on the disassembled negative electrode sheet 22. For the confirmation of whether lithium precipitation occurs: the energy storage apparatus 100 is charged from the initial temperature T0 (for example, -20 degrees Celsius) at a charging rate of 0.3 ~5 until the temperature rises byΔT (greater than or equal to 5 degrees Celsius) to bring the temperature to a target temperature T1; then the energy storage apparatus 100 is charged at a charging rate of 0.5~5 from the target temperature T1 to reach 80% of the electric capacity, and each energy storage apparatus 100 that has been charged to 80% of the electric capacity is then disassembled to observe whether there is lithium precipitation on the negative electrode sheet. It may comprise: 1. no lithium precipitation, i.e., there is no lithium precipitation area on the entire negative electrode sheet; 2. slight lithium precipitation, i.e., the maximum area of a single lithium precipitation area on the entire negative electrode sheet ≤ 5×5 square millimeters, and the number of lithium precipitation area on the entire negative electrode sheet ≤ 1; 3. moderate lithium precipitation, i.e., 5×5 square millimeters < the maximum area of a single lithium precipitation area on the entire negative electrode sheet ≤ 10×10 square millimeters, and the number of lithium precipitation area on the entire negative electrode sheet ≤ 1; 4. severe lithium precipitation, i.e., lithium precipitation exists and the determination conditions for slight lithium precipitation and moderate lithium precipitation are not met.

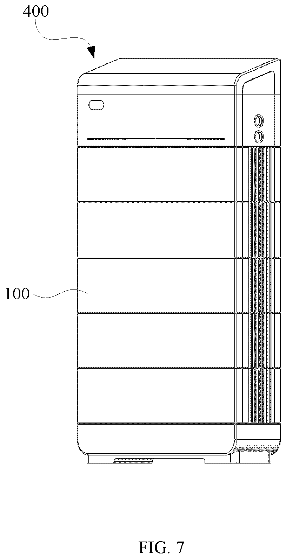

An embodiment of the present disclosure further provides an electrical device 400. The electrical device 400 may be an energy storage device, a vehicle, a container-type energy storage device, etc. As shown in FIG. 7, the electrical device 400 comprises the energy storage apparatus 100 described in the above embodiments, and the energy storage apparatus 100 supplies power to the electrical device 400. In this way, in combination with the energy storage apparatus 100 described above, during the use of the electrical device 400, it facilitates the improvement of the working stability of the electrical device 400 and extends the working time of the electrical device 400.

In the embodiments of the present disclosure, the terms "first", "second", "third", etc. are used for descriptive purposes only and are not to be understood as indicating or implying the relative importance. Unless otherwise expressly limited, "a plurality of" or "multiple" means two or more. Terms such as "installed", " linked", "connected", and "fixed" may all be understood in a broad sense. For example, the term "connected" may be a fixed connection, a detachable connection, or an integral connection. The term "linked" may be a direct connection or an indirect connection through an intermediate medium. For those of ordinary skill in the art, the specific meanings of the above terms in the embodiments of the present disclosure may be understood according to the specific circumstances.

In the description of the embodiments of the present disclosure, It should be understood that the orientations or positional relationships indicated by the terms "on", "below", "left", "right", "front", "back", etc., are orientations or positional relationships shown based on the accompanying drawings. These terms are used only to facilitate the description of the embodiments of the present disclosure and to simplify the description, rather than indicating or implying that the apparatus or unit referred to must be located at a specific direction, or be constructed and operated in a specific orientation, thus cannot be construed as a limitation on the embodiments of the present disclosure.

In the description of the specification, the description of the terms "one embodiment", "some embodiments", "specific embodiment", etc. means that the specific features, structures, materials or characteristics described in combination with the embodiment or example are comprised in at least one embodiment or example of the implementations of the present disclosure. In this specification, the schematic representation of the above terms does not necessarily refer to the same embodiment or example. Moreover, the specific features, structures, materials or characteristics described may be combined in any one or more embodiments or examples in a suitable manner.

The above are only preferred embodiments of the implementations of the present disclosure, and are not intended to limit the implementations of the present disclosure. For those skilled in the art, the implementations of the present disclosure may have various changes and variations. Any modifications, equivalent substitutions, improvements, etc. made within the spirit and principles of the implementations of the present disclosure shall be comprised in the protection scope of the implementations of the present disclosure.

## Claims

1. An energy storage apparatus (100), comprising:
an electrode assembly (20), comprising a positive electrode sheet (21), a negative electrode sheet (22) and a separator (23) in a stacked manner;
wherein the positive electrode sheet (21) comprises a current collector (211) and an active material layer (212) located on a surface of the current collector (211), the active material layer (212) comprises a first lithium-containing compound (Li1) and a second lithium-containing compound (Li2) in granular form, the first lithium-containing compound (Li1) is a positive electrode active material, the second lithium-containing compound (Li2) is a lithium-supplement particle, and the lithium-supplement particle comprises a lithium-supplement core (Li21) and an outer shell (Li22) covering the lithium-supplement core (Li21);
wherein a connection area (AA) and a separation area (BB) are formed between the lithium-supplement core (Li21) and the outer shell (Li22), a distance between the lithium-supplement core (Li21) and the outer shell (Li22) in the connection area (AA) is less than or equal to 5 nanometers, a distance between the lithium-supplement core (Li21) and the outer shell (Li22) in the separation area (BB) is greater than 5 nanometers, and a ratio of a path length of the outer shell (Li22) of the lithium-supplement particle in the connection area (AA) to a total circumference of the outer shell (Li22) within a cross-section of the positive electrode sheet (21) is greater than or equal to 5% and less than or equal to 45%.

2. The energy storage apparatus (100) according to claim 1, wherein a maximum formation voltage of the energy storage apparatus (100) is greater than or equal to 4 volts, and a formation duration is greater than or equal to 3 hours.

3. The energy storage apparatus (100) according to claim 1 or 2, wherein, in a cross-section, a ratio of a total length of an outer contour of the lithium-supplement core (Li21) to a circumference of a smallest circumscribed circle of the outer contour is greater than or equal to 0.7 and less than or equal to 1.

4. The energy storage apparatus (100) according to claim 3, wherein, in the cross-section, the ratio of the total length of the outer contour of the lithium-supplement core (Li21) to the circumference of the smallest circumscribed circle of the outer contour is greater than or equal to 0.7 and less than or equal to 0.9.

5. The energy storage apparatus (100) according to any one of claims 1 to 4, wherein, in a cross-section of the positive electrode sheet (21), a cut edge of the outer shell (Li22) is a continuous structure.

6. The energy storage apparatus (100) according to claim 5, wherein a thickness of the outer shell (Li22) is greater than or equal to 30 nanometers and less than or equal to 200 nanometers.

7. The energy storage apparatus (100) according to any one of claims 1 to 6, wherein median particle size of the lithium-supplement core (Li21) is greater than or equal to 3 microns and less than or equal to 10 microns.

8. The energy storage apparatus (100) according to claim 7, wherein the outer shell (Li22) comprises an MₓO_{y} coating layer and a conductive coating layer, and the MₓO_{y} coating layer is an inner layer of the shell;
wherein, M is at least one of Fe, Co, Ni, Ti, Zn, Mg, Al, Mn, V, Cr, Zr, Cu, Nb, Ta, W, Zr, Y, and La, and values of x and y satisfy: 1≤x≤ 3, and 1≤y≤5.

9. The energy storage apparatus (100) according to claim 8, wherein the conductive coating layer is a carbon coating layer.

10. The energy storage apparatus (100) according to claim 9, wherein mass proportion of carbon content in the second lithium-containing compound (Li2) is greater than or equal to 0.5% and less than or equal to 4%.

11. The energy storage apparatus (100) according to any one of claims 1 to 10, wherein mass proportion of the second lithium-containing compound (Li2) in the active material layer (212) is greater than or equal to 0.3% and Less than or equal to 5%.

12. The energy storage apparatus (100) according to any one of claims 1 to 11, wherein the lithium-supplement core (Li21) is Li₁₊ᵣM₁₋ₚNₚO₄₋ₛBₛ, wherein 0.1<r<6.1, 0≤p<0.99, 0≤s<0.1 , M and N are respectively at least one of Fe, Co, Ni, Ti, Zn, Mg, Al, Mn, V, Cr, Zr, Cu, Nb, Ta, W, Zr, Y, and La, and B is at least one of S, N, F, Cl, and Br.

13. An electrical device (400), comprising an energy storage apparatus (100) according to any one of claims 1 to 12, wherein the energy storage apparatus (100) supplies power to the electrical device (400).
